# EUROPÄISCHE PATENTSCHRIFT

(11) **EP 0 994 788 B1**
(45) Veröffentlichungstag und Bekanntmachung des Hinweises auf die Patenterteilung: **27.03.2002**
(21) Anmeldenummer: 98936258.7
(22) Anmeldetag: 26.06.1998
(51) Int. Cl.: B60M 1/30, E01B 11/04

(54) **LÄNGLICHE VERBINDUNGSLASCHE ZUM VERBINDEN ZWEIER LÄNGLICHER BAHNSTROMSCHIENEN UND MIT DERARTIGER VERBINDUNGSLASCHE VERBUNDENES PAAR VON BAHNSTROMSCHIENEN**
ELONGATED FISH-PLATE FOR JOINING TWO ELONGATED CONDUCTOR RAILS AND PAIR OF CONDUCTOR RAILS JOINED BY SUCH A FISH-PLATE
ECLISSE DE FORME ALLONGEE POUR LE RACCORDEMENT DE RAILS CONDUCTEURS ALLONGES, ET PAIRE DE RAILS CONDUCTEURS RACCORDEE PAR UNE TELLE ECLISSE

(30) Priorität: 09.07.1997 DE 19729415
(43) Veröffentlichungstag der Anmeldung: 26.04.2000
(73) Patentinhaber: SIEMENS AKTIENGESELLSCHAFT, 80333 München (DE)
(72) Erfinder: JENTZSCH, Peter, D-16540 Hohen Neuendorf (DE); STOLLE, Rüdiger, D-13465 Berlin (DE); AXMANN, Michael, RR1 Dover Centre, NOP 1LO Ontario (CA)
(86) Internationale Anmeldenummer: DE9801774
(87) Internationale Veröffentlichungsnummer: WO9902364

(56) Entgegenhaltungen:
- FR-A- 2 468 691
- US-A- 3 699 275
- PATENT ABSTRACTS OF JAPAN vol. 6, no. 260 (M-180), 18. Dezember 1982 & JP 57 155125 A (SANWA TETSUKI KK), 25. September 1982

## Beschreibung

Die vorliegende Erfindung betrifft einen Bahnstromschienenabschnitt mit zwei Bahnstromschienen, die an Stirnseiten aneinander anstoßen und mindestens eine sich in Schienenlängsrichtung erstreckende Einbuchtung mit Einbuchtungsseitenwänden und einem Einbuchtungsboden aufweisen, wobei die Bahnstromschienen über eine in die Einbuchtung eingelegte Verbindungslasche miteinander verbunden sind.

Ein derartiger Bahnstromschienenabschnitt ist z. B. aus der DE-PS 448 129 bekannt.

Aus der US 5 249 654 A ist eine längliche Verbindungslasche zum Verbinden zweier Schienen bekannt, die an Stirnseiten aneinander anstoßen und zwei sich in Schienenlängsrichtung erstreckende Einbuchtungen mit Einbuchtungsseitenwänden und einem Einbuchtungsboden aufweisen. Bei in die Einbuchtung eingelegter Verbindungslasche liegt diese mit ihrer Laschenbodenseite auf dem Einbuchtungsboden der Einbuchtung auf und ist von den Einbuchtungsseitenwänden der Einbuchtung beabstandet.

Im Stand der Technik werden Aluminium-Verbundstromschienen gemäß DIN 43156 durch längliche Verbindungslaschen miteinander verbunden, welche mittels des sogenannten Huck-Bolzenverfahrens form- und kraftschlüssig mit den Stromschienen verbunden werden. Da die Herstellung der Stromschienen technologisch bedingt mit Toleranzen behaftet ist, werden diese Toleranzen aufgrund der form- und kraftschlüssigen Verbindung der Stromschienen mit der Verbindungslasche auf die Lauffläche verlagert, auf der der Stromabnehmer der elektrischen Bahn entlang läuft, die mit Strom versorgt wird. Zum Ausgleich dieser Toleranzen wird im Stand der Technik die Lauffläche geschliffen. Dies ist jedoch mit erhöhtem Arbeitsaufwand verbunden und verringere darüber hinaus die Lebensdauer der Stromschiene.

Die Aufgabe der vorliegenden Erfindung besteht darin, einen Bahnstromschienenabschnitt zu schaffen, bei welchem eine Nachbearbeitung unnötig ist, die Lebensdauer in vollem Umfang erhalten bleibt und gleichzeitig ein sicherer elektrischer Kontakt zwischen Stromschienen und Verbindungslasche gewährleistet ist.

Die Aufgabe wird dadurch gelöst,
- daß die Verbindungslasche mit einer Laschenbodenseite auf dem Einbuchtungsboden aufliegt und von den Einbuchtungsseitenwänden beabstandet ist,
- daß die Verbindungslasche aus einem härteren Material besteht als die Bahnstromschienen und
- daß die Laschenbodenseite Vorsprünge aufweist, die sich beim Befestigen der Verbindungslasche an den Bahnstromschienen in diese eindrücken.

Die Verbindungslasche besteht aus elektrisch leitendem Material, insbesondere Metall, z. B. Aluminium, und ist üblicherweise ein Strangpreßteil. Wenn die Vorsprünge daher als sich in Laschenlängsrichtung erstreckende Längsrillen ausgebildet sind, so lassen sich die Längsrillen bereits beim Strangpressen in die Verbindungslasche einbringen. Eine Nachbearbeitung der Verbindungslasche ist nicht erforderlich.

Wenn die Verbindungslasche im Querschnitt im wesentlichen die Form eines symmetrischen Trapezes mit einer langen und einer kurzen Parallelseite aufweist, läßt sich die Verbindungslasche besonders leicht und einfach in die Einbuchtung einführen.

Wenn die Verbindungslasche die Einbuchtung im wesentlichen ausfüllt, ist die Verbindungslasche bezüglich der Stromschiene in Querrichtung bereits durch das Einführen fast justiert.

Weitere Vorteile und Einzelheiten ergeben sich aus der nachfolgenden Beschreibung eines Ausführungsbeispiels. Dabei zeigen:
- Fig. 1: ein Paar von mit einer Verbindungslasche verbundenen Stromschienen,
- Fig. 2: die Verbindungslasche im Querschnitt und
- Fig. 3: einen Schnitt längs der Linie III-III von Fig. 1.

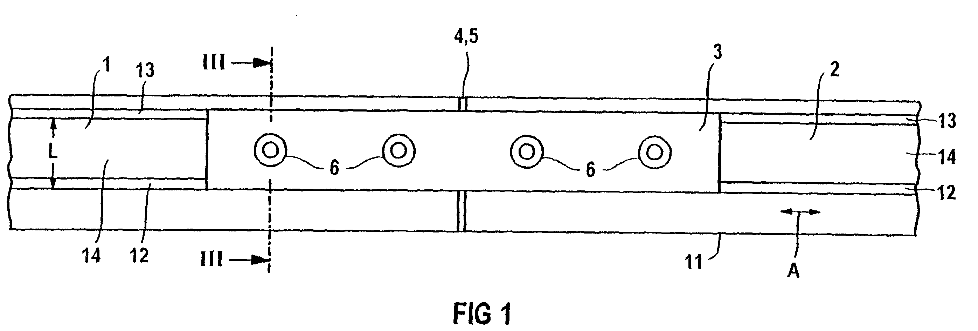

Gemäß Fig. 1 sind zwei längliche Stromschienen 1, 2 gemäß DIN 43156 mit einer Verbindungslasche 3 miteinander verbunden. Die Stromschienen 1, 2 erstrecken sich in Schienenlängsrichtung, d. h. in Richtung des Doppelpfeiles A. Sie weisen Stirnseiten 4, 5 auf, mit denen sie aneinander anstoßen. Die Verbindungslasche 3 ist länglich ausgebildet, erstreckt sich entlang einer Schienenlängsrichtung A über die Endbereiche beider Stromschienen 1, 2 und ist mit den Stromschienen an den Verbindungsstellen 6 kraftschlüssig verbunden. Die Verbindungsstellen 6 sind üblicherweise als Huck-Bolzen ausgebildet. Dies ist jedoch nicht erfindungswesentlich.

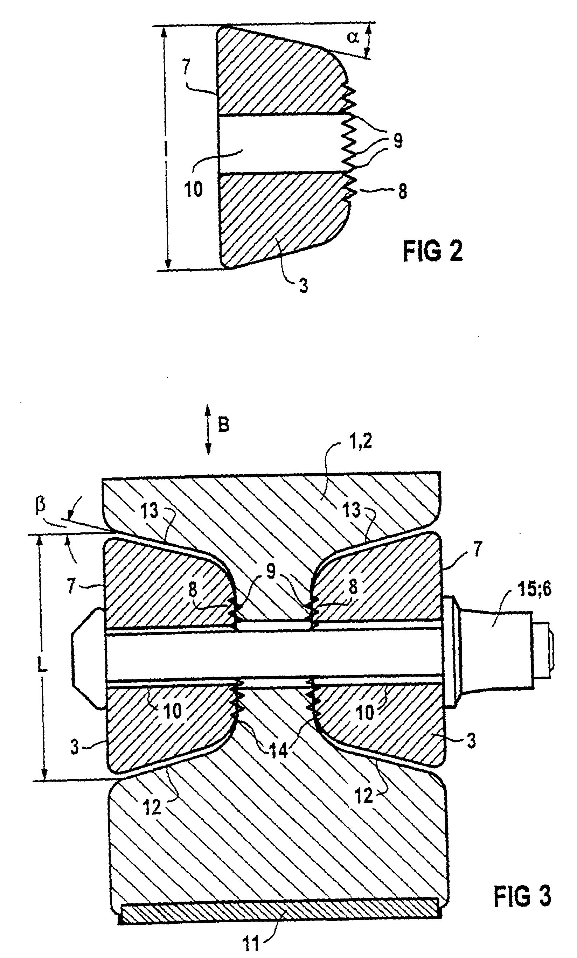

Fig. 2 zeigt nun die Verbindungslasche 3 im Querschnitt. Wie sofort ersichtlich ist, hat der Laschenquerschnitt im wesentlichen die Form eines symmetrischen Trapezes mit einer langen Parallelseite 7 und einer kurzen Parallelseite 8. Die lange Parallelseite 7 hat eine Länge 1 von 58 mm, der Neigungswinkel α beträgt 14°. An ihrer kurzen Parallelseite 8, im folgenden auch Laschenbodenseite 8 genannt, weist die Verbindungslasche 3 Vorsprünge 9 in Form von sich in Laschenlängsrichtung A erstreckenden Längsrillen 9 auf.

Die Verbindungslasche 3 ist ein Strangpreßteil. Die Längsrillen 9 sind daher auf einfache Weise sofort beim Strangpressen mit herstellbar. Ein Nachbearbeiten der Verbindungslasche 3 ist nicht erforderlich.

Wie ersichtlich ist, weist die Verbindungslasche 3 ferner Bohrungen 10 zum Durchführen von Huck-Bolzen auf.

Fig. 3 zeigt nun das Gesamtsystem. Wie ersichtlich ist, sind die Stromschienen 1, 2 symmetrisch aufgebaut. Sie weisen im wesentlichen die Form eines Doppel-T auf. Die Stromschienen 1, 2 bestehen aus Aluminium der Härte F 24. In ihren Boden ist eine Lauffläche 11 aus Stahl für einen Stromabnehmer eingepreßt.

Wie ersichtlich ist, weisen die Stromschienen 1, 2 DIN-gemäß eine linke und eine rechte Einbuchtung auf, die sich jeweils in Schienenlängsrichtung A erstrecken. Die Einbuchtungen weisen jeweils Einbuchtungsseitenwände 12, 13 und einen Einbuchtungsboden 14 auf. Die Einbuchtungen sind, wie aus Fig. 3 sofort ersichtlich ist, im wesentlichen trapezförmig, weisen also ebenso wie die Verbindungslasche 3 jeweils eine lange und eine kurze Parallelseite auf. Die lange Parallelseite der Einbuchtungen hat eine Länge L von 61 mm. Der Neigungswinkel β beträgt ebenfalls 14°.

Wie ersichtlich ist, liegen die Verbindungslaschen 3 mit ihren Laschenbodenseiten 8 auf den Einbuchtungsböden 14 auf und sind von den Einbuchtungsseitenwänden 12, 13 auch nach dem Einlegen in die jeweilige Einbuchtung beabstandet. Dadurch ist eine Höhenjustierung der Stromschienen 1, 2 relativ zueinander in Richtung des Doppelpfeiles B möglich. Die Stromschienen 1, 2 können also derart miteinander verbunden werden, daß die Laufflächen 11 der Stromschienen 1, 2 höhengleich ineinander übergehen. Ein Nachbearbeiten der Laufflächen 11 ist nicht erforderlich.

Wie ferner ersichtlich ist, haben sich die Längsrillen 9 beim Befestigen der Verbindungslaschen 3 in die Bahnstromschienen 1, 2 eingedrückt. Dies ist dadurch möglich, daß die Verbindungslaschen 3 aus einem Material der Härte F 31 hergestellt sind, die Stromschienen 1, 2 hingegen aus einem Material der Härte F 24, also weicher sind. Eine Bearbeitung der Stromschienen 1, 2, um die unvermeidliche Oxidschicht zu beseitigen, ist daher nicht mehr erforderlich.

Wie ferner ersichtlich ist, füllen die Verbindungslaschen 3 die jeweilige Einbuchtung im wesentlichen aus. Es ist nur noch eine Feinjustierung der Verbindungslaschen 3 bezüglich der Stromschienen 1, 2 erforderlich, um danach die Huck-Bolzen 15 durchführen und befestigen zu können.

## Patentansprüche

1. Bahnstromschienenabschnitt mit zwei Bahnstromschienen (1, 2), die an Stirnseiten (4, 5) aneinander anstoßen und mindestens eine sich in Schienenlängsrichtung (A) erstreckende Einbuchtung mit Einbuchtungsseitenwänden (12, 13) und einem Einbuchtungsboden (14) aufweisen, wobei die Bahnstromschienen (1, 2) über eine in die Einbuchtung eingelegte Verbindungslasche (3) miteinander verbunden sind,
**dadurch gekennzeichnet,**
- **daß** die Verbindungslasche (3) mit einer Laschenbodenseite (8) auf dem Einbuchtungsboden (14) aufliegt und von den Einbuchtungsseitenwänden (12, 13) beabstandet ist,
- **daß** die Verbindungslasche aus einem härteren Material besteht als die Bahnstromschienen (1, 2) und
- **daß** die Laschenbodenseite (8) Vorsprünge (9) aufweist, die sich beim Befestigen der Verbindungslasche (3) an den Bahnstromschienen (1, 2) in diese eindrücken.

2. Bahnstromschienenabschnitt nach Anspruch 1,
**dadurch gekennzeichnet, daß**
die Vorsprünge (9) als sich in Schienenlängsrichtung (A) erstreckende Längsrillen (9) ausgebildet sind.

3. Bahnstromschienenabschnitt nach Anspruch 1 oder 2,
**dadurch gekennzeichnet, daß**
die Verbindungslasche (3) im Querschnitt im wesentlichen die Form eines symmetrischen Trapezes mit einer langen (7) und einer kurzen (8) Parallelseite aufweist.

4. Bahnstromschienenabschnitt nach Anspruch 1, 2 oder 3,
**dadurch gekennzeichnet, daß**
die Verbindungslasche (3) die Einbuchtung im wesentlichen ausfüllt.

## Claims

1. Conductor rail section with two conductor rails (1, 2), which abut at their front faces (4, 5) and have at least one recess extending in the longitudinal direction (A) of the rail with recess side walls (12, 13) and a recess bottom (14), the conductor rails (1, 2) being joined to one another via a fish-plate (3) inserted into the recess, **characterized in that**
- the bottom side (8) of the fish-plate (3) lies on the bottom (14) of the recess and the fish-plate is distanced from the side walls (12, 13) of the recess,
- the fish-plate is made of a harder material than the conductor rails (1, 2) and
- its bottom side (8) has projections (9), which are pressed into the conductor rails (1, 2) when the fish-plate (3) is secured to the latter.

2. Conductor rail section according to claim 1, **characterized in that** the projections (9) are formed as longitudinal grooves (9) extending in the longitudinal direction (A) of the rail.

3. Conductor rail section according to claim 1 or 2, **characterized in that** the cross-section of the fish-plate (3) has substantially the shape of a symmetrical trapezium with a long (7) and a short (8) parallel side.

4. Conductor rail section according to claim 1, 2 or 3, **characterized in that** the fish-plate (3) substantially fills the recess.

## Revendications

1. Tronçon de rail conducteur comportant deux rails (1, 2) conducteurs qui sont bout à bout par leurs faces (4, 5) frontales et possèdent au moins un renfoncement s'étendant dans le sens (A) longitudinal des rails et doté de parois (12, 13) latérales de renfoncement et d'un fond (14) de renfoncement, les rails (1, 2) conducteurs étant mutuellement reliés par une éclisse (3) mise dans le renfoncement,
**caractérisé**
- **en ce que** l'éclisse (3) repose sur le fond (14) de renfoncement par une face (8) de fond d'éclisse et est distante des parois (12, 13) latérales de renfoncement,
- **en ce que** l'éclisse est constituée d'un matériau plus dur que les rails (1, 2) conducteurs,
- et **en ce que** la face (8) de fond d'éclisse comporte des saillies (9) qui s'enfoncent dans les rails (1, 2) conducteurs lors de la fixation de l'éclisse (3) sur ceux-ci.

2. Tronçon de rail conducteur suivant la revendication 1, **caractérisé en ce que** les saillies (9) sont réalisées sous forme de rainures (9) longitudinales s'étendant dans le sens (A) longitudinal des rails.

3. Tronçon de rail conducteur suivant la revendication 1 ou 2, **caractérisé en ce que** l'éclisse (3) possède une section essentiellement en forme de trapèze symétrique, ayant une grande base (7) et une petite base (8).

4. Tronçon de rail conducteur suivant la revendication 1, 2 ou 3, **caractérisé en ce que** l'éclisse (3) remplit essentiellement la totalité du renfoncement.
